# EUROPÄISCHE PATENTSCHRIFT

(11) **EP 1 712 319 B1**
(45) Veröffentlichungstag und Bekanntmachung des Hinweises auf die Patenterteilung: **24.11.2010**
(21) Anmeldenummer: 06005721.3
(22) Anmeldetag: 21.03.2006
(51) Int. Cl.: B23K 1/00, B23K 1/008, B23K 3/08, F27B 9/06, F27B 9/24, B23K 101/14, B23K 103/10

(54) **Anlage und Verfahren zum Herstellen von gelöteten Bauteilen mit einem Durchlauflötofen und einer statischen Abkühlzone**
Installation for and method of manufacturing brazed structures with a continuous furnace and a static cooling zone
Installation et procédé de fabrication de pièces brasées avec un four à passage continu et une zone de refroidissement statique

(30) Priorität: 12.04.2005 DE 102005016957
(43) Veröffentlichungstag der Anmeldung: 18.10.2006
(73) Patentinhaber: Behr GmbH & Co. KG, 70469 Stuttgart (DE)
(72) Erfinder: Jenseit, Andreas, 70825 Korntal-Münchingen (DE); Völker, Cord, Dipl.-Ing. (FH), 71522 Backnang (DE); Weisshaar, Peter, 75443 Ötisheim (DE)
(74) Vertreter: Grauel, Andreas

(56) Entgegenhaltungen:
- EP-A- 0 167 689
- US-A- 4 294 395
- US-A- 4 519 854
- US-A- 5 147 083
- US-A1- 2002 130 164
- PATENT ABSTRACTS OF JAPAN Bd. 2002, Nr. 09, 4. September 2002 (2002-09-04) -& JP 2002 130989 A (HARMAN KAKO:KK), 9. Mai 2002 (2002-05-09)

## Beschreibung

Die Erfindung betrifft eine Anlage und ein Verfahren zum Herstellen von gelöteten Wärmetauschern, aus kaltaushärtbaren Aluminiumlegierungen oder aus Knetlegierungen deren Festigkeit durch eine hohe Abkühlrate gesteigert werden kann, gemäß dem Oberbegriff der Anspürche 1 und 4 (siehe, z.B., US 5 147 083 A).

Zur Herstellung von gelöteten Aluminiumwärmetauschern stehen verschiedene Lötverfahren zur Verfügung, wobei derzeitig das CAB (Controlled Atmosphere Braze) Löten am weitesten verbreitet ist. Der Nachteil beim CAB Löten war bisher, dass die zur Verfügung stehenden beziehungsweise einsetzbaren Werkstoffe für dieses Verfahren gegenüber den anderen Lötverfahren deutlich geringere Festigkeiten aufwiesen. In den letzten Jahren sind jedoch Werkstoffe für das CAB Löten entwickelt worden, die durch eine gezielte, schnelle Abkühlung nach dem Lötvorgang eine deutliche Festigkeitssteigerung erfahren. Diese Werkstoffe werden als kaltaushärtbare Aluminiumlegierungen bezeichnet. Durch ein "Einfrieren" des Werkstoffzustandes, den diese Werkstoffe bei hohen Temperaturen, zum Beispiel höher als 400°C bis 500°C, einnehmen, sowie durch eine möglichst hohe Abkühlrate von mehr als 40 K/min, insbesondere von mehr als 200 K/min, wird erreicht, dass der Werkstoff bei Raumtemperatur in einem instabilen Zustand vorliegt.

Durch die Bildung von feinst dispersen Ausscheidungen in den folgenden Tagen kann die Festigkeit dieser Werkstoffe um circa 10 bis 50 % erhöht werden, und zwar in Abhängigkeit von der Abkühlrate und den Werkstoffeigenschaften. Auch so genannte Knetlegierungen, die als nicht aushärtbar bezeichnet werden, können durch eine hohe Abkühlrate eine signifikante Festigkeitssteigerung erfahren. Die höheren Festigkeitswerte liefem den Vorteil, dass die Materialdicken der gelöteten Wärmetauscher reduziert werden können.

Im Rahmen der vorliegenden Erfindung wurde intern eine CAB-Durchlauflötanlage betrachtet, bei der sich an einen Lötmuffel ein circa 4 bis 10 m langer Bereich anschließt, der ebenfalls als Muffel ausgeführt ist und mit Schutzgas, in der Regel Stickstoff, gespült wird. Dieser Bereich wird au-ßen mit Kühlwasser gekühlt. In diesem Bereich der Lötanlage, der als Wasserkühlzone bezeichnet wird, werden die Wärmetauscher je nach Größe und Konstruktion von circa 600°C (Löttemperatur) auf circa 300°C heruntergekühlt, und zwar mit einer Abkühlrate von circa 20 bis 60 K/min, Nach dem Abkühlen auf circa 300°C verlassen die Wärmetauscher die Wasserkühlzone und werden einer Luftkühlstation zugeführt. Im Rahmen der vorliegenden Erfindung wurde festgestellt, dass bei der betrachteten Anlage in einem kritischen Abkühlbereich zwischen 550°C und 200°C die Abkühlrate nicht ausreicht, um eine signifikante Festigkeitssteigerung der Aluminiumlegierung zu erzielen.

Aufgabe der Erfindung ist es, eine Anlage zum Herstellen von gelöteten Bauteilen, insbesondere von Wärmetauschern, aus Werkstoffen, insbesondere aus Aluminium-Werkstoffen, deren Festigkeit durch eine hohe Abkühlrate gesteigert werden kann, insbesondere aus kaltaushärtbaren Aluminiumlegierungen oder aus Knetlegierungen, mit einem Durchlauflötofen, insbesondere einem CAB Durchlauflötofen, der eine Muffel umfasst, die mit Schutzgas gespült wird und eine Eintrittsöffnung sowie eine Austrittsöffnung aufweist, zu schaffen, die eine schnelle Abkühlung nach dem Lötvorgang, insbesondere in einem Temperaturbereich von 600°C bis 200°C, insbesondere von 550°C bis 200°C, ermöglicht.

Die Erfindung ist durch eine Anlage gemäß Anspruch 1 und ein Verfahren gemäß Anspruch 4 definiert.

Der Begriff "statisch" bedeutet gemäß der Erfindung in diesem Zusammenhang, dass die Abkühlzone nicht aktiv, zum Beispiel mit Hilfe eines Wasserkreislaufs, von außen gekühlt wird. Dadurch können die Herstell- und Betriebskosten der Anlage reduziert werden. Ein bevorzugtes Ausführungsbeispiel der Anlage ist dadurch gekennzeichnet, dass die statische Abkühlzone nach außen hin isoliert ist. Durch die Isolierung wird gewährleistet, dass die Bauteile nur eine geringe und langsame Abkühlung erfahren, bevor sie die statische Abkühlzone verlassen.

Der Anlage und das Verfahren gemäß den Erfindung sind dadurch gekennzeichnet, dass die statische Abkühlzone als Muffel ausgeführt ist, die mit Schutzgas, zum Beispiel mit Stickstoff, gespült wird. Das Schutzgas dient dazu, die Ofenatmosphäre aufrecht zu erhalten.

Ein weiteres bevorzugtes Ausführungsbeispiel der Anlage ist dadurch gekennzeichnet, dass die statische Abkühlzone beheizt ist. Durch die Beheizung wird sichergestellt, dass die Bauteile am Ende der statischen Abkühlzone nicht zu stark abgekühlt sind, insbesondere wenn die statische Abkühlzone länger als zum Beispiel 2 m ist.

Ein weiteres bevorzugtes Ausführungsbeispiel der Anlage ist dadurch gekennzeichnet, dass die Länge der statischen Abkühlzone so gewählt ist, dass die Bauteile am Ende der statischen Abkühlzone eine relativ hohe vorgegebene Temperatur von 500°C bis 600°C, bevorzugt von 500°C bis 550°C, aufweisen. Dies ist mit der statischen Kühlzone ohne großen baulichen Aufwand möglich.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine schematische Darstellung eines Ausführungsbeispiels einer erfindungsgemäßen Anlage;
- Figur 2: eine bekannte Wasserkühlzone im Querschnitt;
- Figur 3: eine statische Kühlzone im Querschnitt und
- Figur 4: eine statische Kühlzone im Querschnitt, die zusätzlich beheizt ist.

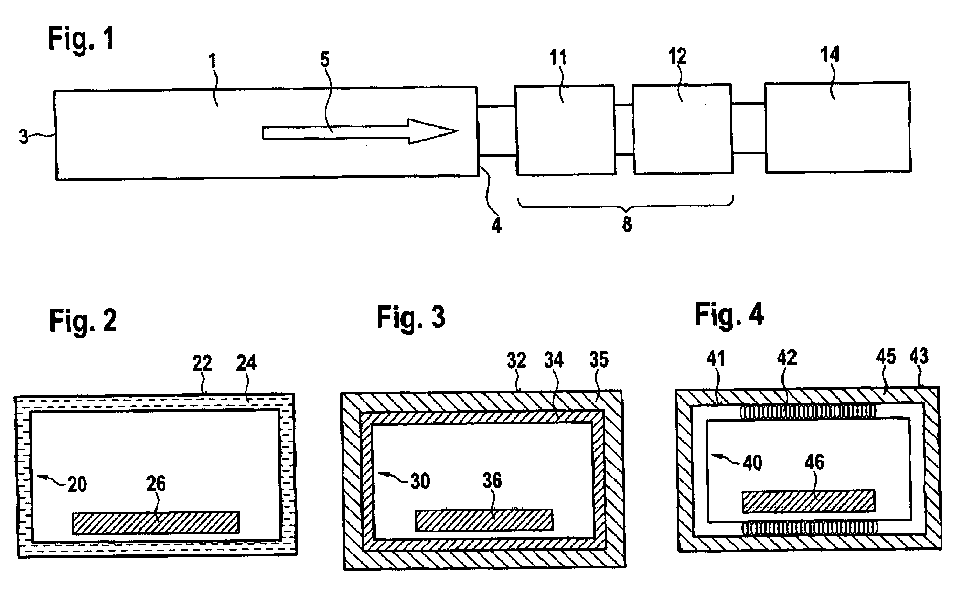

In Figur 1 ist ein Durchlauflötofen 1 mit einer Eintrittsöffnung 3 und einer Austrittsöffnung 4 schematisch dargestellt. Die Durchlaufrichtung des Durchlauflötofens 1 ist durch einen Pfeil 5 angegeben. Im Anschluss an den Durchlauflötofen 1 ist eine statische Abkühlzone 8 angeordnet, die zwei Teilzonen 11 und 12 umfasst. Statt der beiden Teilzonen 11 und 12 kann die statische Abkühlzone 8 aber auch nur eine Zone umfassen. Im Anschluss an die statische Abkühlzone 8 ist bei diesem Ausführungsbeispiel eine Standardluftkühlung 15 angeordnet.

In Figur 2 ist eine Wasserkühlzone im Querschnitt dargestellt, wie sie in der eingangs betrachteten CAB-Lötanlage verwendet wird. Die Wasserkühlzone umfasst innen eine Muffel 20, die im Querschnitt die Gestalt eines geschlossenen Rechtecks aufweist. Zwischen der Muffel 20 und einer die Muffel 20 umgebenden Außenwand 22 zirkuliert Kühlwasser 24. Durch das Kühlwasser 24 wird der Innenraum der Muffel 20 aktiv von außen gekühlt. Im Inneren der Muffel 20 ist Lötgut 26 angeordnet. Bei dem Lötgut 26 handelt es sich zum Beispiel um Wärmetauscher, die aus kaltaushärtbaren Aluminiumlegierungen oder aus Knetlegierungen gebildet sind.

In Figur 3 ist eine erfindungsgemäße Abkühlzone ohne Wasserkühlung schematisch im Querschnitt dargestellt. Die Abkühlzone weist innen eine Muffel 30 auf, die, im Querschnitt betrachtet, die Gestalt eines geschlossenen Rechtecks hat. Zwischen der Muffel 30 und einer Außenwand 32 sind statt einer Wasserkühlung zwei Isolierschichten 34 und 35 angeordnet. Im Inneren der Muffel 30 ist Lötgut 36 angeordnet.

In Figur 4 ist eine erfindungsgemäße Abkühlzone schematisch im Querschnitt dargestellt, die zusätzlich beheizt ist. Die in Figur 4 dargestellte Abkühlzone umfasst eine Muffel 40, die, im Querschnitt betrachtet, die Gestalt eines geschlossenen Rechtecks hat. Zwischen der Muffel 40 und einer ersten Außenwand 41 ist eine Heizeinrichtung 42 angeordnet. Die Heizeinrichtung 42 dient dazu, den Innenraum der Muffel 40 zu beheizen. Zwischen der ersten Außenwand 41 und einer zweiten Außenwand 43 ist eine Isolierschicht 45 vorgesehen. Im Inneren der Muffel 40 ist Lötgut 46 angeordnet.

Gemäß einem Aspekt der vorliegenden Erfindung wird die Abkühlzone 8 in der Länge auf ein Mindestmaß reduziert, vorzugsweise auf eine Länge von 2 m. Darüber hinaus ist diese Abkühlzone nicht wassergekühlt, sondern mittels eines geeigneten Isoliermaterials 34, 35 isoliert. Dadurch wird gewährleistet, dass das Lötgut 36 nur eine geringe Abkühlung erfährt, bevor es die Abkühlzone 8 verlässt und in die Standardluftkühlstation 14 transportiert wird. In der Standardluftkühlstation 14 wird das Lötgut 36 ohne großen Aufwand mit einer Abkühlrate von circa 100 bis 400 K/min auf eine gewünschte Temperatur, zum Beispiel Raumtemperatur, abgekühlt.

Aufgrund von vorgegebenen Randbedingungen kann es sein, dass eine Verkürzung der statischen Abkühlzone 8 auf circa 2 m nicht möglich ist. Je nach Werkstoff und Anwendung kann es auch sein, dass am Austritt der statischen Abkühlzone 8 eine exakte Austrittstemperatur gewährleistet werden muss. In diesen Fällen kann die statische Abkühlzone mehr als 2 m lang sein. Gemäß einem weiteren Aspekt der vorliegenden Erfindung wird die statische Abkühlzone 8 gemäß dem in Figur 4 dargestellten Ausführungsbeispiel dann beheizt.

Gemäß einem weiteren Aspekt der Erfindung ist der Durchlauflötofen 1 nicht über die gesamte Länge beheizt. Stattdessen ist im Bereich der Austrittsöffnung 4 eine unbeheizte Zone vorgesehen. Die unbeheizte Zone ist hinsichtlich ihrer Länge und ihrer Abkühlrate so ausgelegt, dass das Lötgut beim Erreichen der Austrittsöffnung 4 die gewünschte Temperatur hat. Demzufolge kann die statische Abkühlzone 8 entfallen. Das Lötgut kann direkt vom Lötofen 1 zu der Standardluftkühlungsstation 14 transportiert werden.

Gemäß einem weiteren Aspekt der Erfindung wird in der statischen Abkühlzone, zum Beispiel von unten, Stickstoff in die Muffel 30, 40 eingeblasen. Dadurch wird sichergestellt, dass die Wärmetauscher ausreichend schnell auf eine Temperatur unterhalb der Solidustemperatur des Lotes abgekühlt werden. Außerdem wirkt sich die Stickstoffatmosphäre günstig auf die Materialeigenschaften des Lötguts aus.

## Patentansprüche

1. Anlage zum Herstellen von gelöteten Wärmetauschern aus kaltaushärtbaren Aluminiumlegierungen oder aus Knetlegierungen, deren Festigkeit durch eine hohe Abkühlrate gesteigert werden kann, mit einem Durchlauflötofen, insbesondere mit einem CAB (Controlled Atmosphere Braze) Durchlauflötofen (1), der eine Muffel umfasst, die mit Schutzgas gespült wird und eine Eintrittsöffnung (3) sowie eine Austrittsöffnung (4) aufweist, **dadurch gekenntzeichnet, dass** sich an das austrittsseitige Ende (4) des Durchiauflötofens (1) eine statische Abkühlzone (8) ohne aktive äußere Kühlung anschließt, in deren Anschluss eine Luftkühlstation angeordnet ist, wobei die statische Abkühlzone (8) nach außen hin isoliert ist und als Muffel (30,40) ausgeführt ist, die mit Schutzgas, zum Beispiel mit Stickstoff, gespült wird.

2. Anlage nach Anspruch 1, **dadurch gekennzeichnet, dass** die statische Abkühlzone (8) beheizt ist.

3. Anlage nach einem der Ansprüche 1 bis 2, **dadurch gekennzeichnet, dass** die Länge der statischen Abkühlzone (8) so bemessen ist, dass die Wärmetauscher am Ende der statischen Abkühlzone (8) eine vorgegebene Temperatur von 500°C bis 600°C, bevorzugt von 500°C bis 550°C, aufweisen.

4. Verfahren zum Herstellen von gelöteten Wärmetauschern aus kaltaushärtbare Aluminiumlegierungen oder aus Knetlegierungen, deren Festigkeit durch eine hohe Abkühlrate gesteigert werden kann, bei dem die Wärmetauscher einen Durchlauflötofen, insbesondere CAB (Controlled Atmosphere Braze) Durchlauflötofen (1), durchlaufen, welcher eine Muffel umfasst, die mit Schutzgas gespült wird, und eine Eintrittsöffnung (3) sowie eine Austrittsöffnung (4) aufweist, **dadurch gekennzechnet, dass** die Wärmetauscher an dem austrittseitigen Ende (4) des Durchlauflötofens (1) eine statische Abkühlzone (8) ohne aktive äußere Kühlung und anschließend eine Luftkühlstation (14) durchlaufen und in deren Anschluss eine Luftkühlstation (14) angeordnet ist und durchlaufen wird, wobei die statische Abkühlzone (8) nach außen hin isoliert ist und als Muffel (30,40) ausgeführt ist, die mit Schutzgas, zum Beispiel mit Stickstoff; gespült wird.

5. Verfahren nach Anspruch 4, **dadurch gekennzeichnet, dass** die statische Abkühlzone (8) beheizt wird.

6. Erfahren nach einem der Ansprüche 4 bis 5, **dadurch gekennzeichnet, dass** die Wärmetauscher am Ende der statische Abkühlzone (8) eine vorgegebene Temperatur von 500°C bis 600°C, bevorzugt von 500°C bis 550°C, aufweisen.

## Claims

1. A system for manufacturing soldered heat exchangers composed of cold-curable aluminum alloys or wrought alloys, the strength of which can be increased by using a high cool-down rate, comprising a continuous brazing furnace, in particular a CAB (Controlled Atmosphere Braze) continuous brazing furnace (1) that includes a muffle that is rinsed with inert gas, and including an inlet opening (3) and an outlet opening (4), **characterized in that** the outlet-side end (4) of the continuous brazing furnace (1) abuts a static cool-down zone (8) without active external cooling, which is directly adjoined by an air-cooling station, the static cool-down zone (8) being insulated against the outside and being designed as a muffle (30, 40) that is rinsed with inert gas e.g. nitrogen.

2. The system according to claim 1, **characterized in that** the static cool-down zone (8) is heated.

3. The system according to one of the claims 1 through 2, **characterized in that**, at the end of the static cool-down zone (8), the length of the static cool-down zone (8) is dimensioned such that the heat exchangers have a specified temperature of 500°C to 600°C, preferably 500°C to 550°C.

4. A method for manufacturing soldered heat exchangers composed of cold-curable aluminum alloys or wrought alloys, the strength of which can be increased by using a high cool-down rate, in the case of which the heat exchangers pass through a continuous brazing furnace, in particular a CAB (Controlled Atmosphere Braze) continuous brazing furnace (1) that includes a muffle that is rinsed with inert gas, and including an inlet opening (3) and an outlet opening (4), **characterized in that**, on the outlet-side end (4) of the continuous brazing furnace (1), the heat exchangers pass through a static cool-down zone (8) without active external cooling, and then pass through an air-cooling station (14); directly adjacent thereto an air-cooling station (14) is disposed and is passed through, the static cool-down zone (8) being insulated against the outside and being designed as a muffle (30, 40) that is rinsed with inert gas e.g. nitrogen.

5. The method according to claim 4, **characterized in that** the static cool-down zone (8) is heated.

6. The method according to one of the claims 4 through 5, **characterized in that**, at the end of the static cool-down zone (8), the heat exchangers have a specified temperature of 500°C to 600°C, preferably 500°C to 500°C.

## Revendications

1. Installation de fabrication d'échangeurs de chaleur brasés à partir d'alliages d'aluminium ou à partir d'alliages forgeables dont la résistance mécanique peut être augmentée par un taux de refroidissement élevé, comprenant un four de brasage à passage continu, en particulier un four de brasage à passage continu (1), de type CAB (brasage sous atmosphère contrôlée), qui comprend un moufle qui est balayé par un gaz inerte et présente une ouverture d'entrée (3) ainsi qu'une ouverture de sortie (4),
**caractérisée en ce qu'**une zone de refroidissement statique (8), sans refroidissement extérieur actif, fait suite à l'extrémité (4), côté sortie, du four de brasage à passage continu (1), zone de refroidissement à la suite de laquelle est disposé un poste de refroidissement à air, où la zone de refroidissement statique (8) est isolée vers l'extérieur et est réalisée comme un moufle (30, 40) qui est balayé par un gaz inerte, par exemple de l'azote.

2. Installation selon la revendication 1, **caractérisée en ce que** la zone de refroidissement statique (8) est chauffée.

3. Installation selon l'une des revendications 1 ou 2, **caractérisée en ce que** la longueur de la zone de refroidissement statique (8) est dimensionnée de manière telle, que les échangeurs de chaleur présentent, au niveau de l'extrémité de la zone de refroidissement statique (8), une température prédéfinie comprise entre 500°C et 600°C, de préférence entre 500°C et 550°C.

4. Procédé de fabrication d'échangeurs de chaleur brasés à partir d'alliages d'aluminium durcissables à froid ou à partir d'alliages forgeables dont la résistance mécanique peut être augmentée par un taux de refroidissement élevé, fabrication au cours de laquelle les échangeurs de chaleur traversent un four de brasage à passage continu, en particulier un four de brasage à passage continu (1), de type CAB (brasage sous atmosphère contrôlée), lequel four de brasage à passage continu comprend un moufle qui est balayé par un gaz inerte et présente une ouverture d'entrée (3) ainsi qu'une ouverture de sortie (4), **caractérisé en ce que** les échangeurs de chaleur traversent, au niveau de l'extrémité (4), côté sortie, du four de brasage à passage continu (1), une zone de refroidissement statique (8) sans refroidissement extérieur actif et, ensuite, un poste de refroidissement à air (14), zone de refroidissement à la suite de laquelle est disposé et traversé un poste de refroidissement à air (14), où la zone de refroidissement statique (8) est isolée vers l'extérieur et est réalisée comme un moufle (30, 40) qui est balayé par un gaz inerte, par exemple de l'azote.

5. Procédé selon la revendication 4, **caractérisé en ce que** la zone de refroidissement statique (8) est chauffée.

6. Procédé selon l'une des revendications 4 ou 5, **caractérisé en ce que** les échangeurs de chaleur présentent, au niveau de l'extrémité de la zone de refroidissement statique (8), une température prédéfinie comprise entre 500°C et 600°C, de préférence entre 500°C et 550°C.
